# EUROPEAN PATENT SPECIFICATION

(11) **EP 2 008 336 B1**
(45) Date of publication and mention of the grant of the patent: **12.09.2012**
(21) Application number: 07735415.7
(22) Date of filing: 06.04.2007
(51) Int. Cl.: H01M 10/0525, H01M 10/0567, H01M 4/13, H01M 10/058

(54) **LITHIUM RECHARGEABLE ELECTROCHEMICAL CELL**
WIEDERAUFLADBARE ELEKTROCHEMISCHE LITHIUMZELLE
PILE ELECTROCHIMIQUE AU LITHIUM RECHARGEABLE

(30) Priority: 07.04.2006 EP 06112361; 18.10.2006 WO PCT/IB2006/053832; 18.10.2006 WO PCT/IB2006/053833
(43) Date of publication of application: 31.12.2008
(60) Divisional application: 11153267.7
(73) Proprietor: Dow Global Technologies LLC, Midland, MI 48674 (US)
(72) Inventor: EXNAR, Ivan, CH-4452 Itingen (CH); WANG, Qing, CH-1012 lausanne (CH); GRÄTZEL, Michael, CH-1025 St-sulpice (CH); ZAKEERUDDIN, Shaik Mohammed, CH-1020 Renens (CH); KAVAN, Ladislav, 18200 Praha 8 (CZ)
(74) Representative: Raynor, John
(86) International application number: PCT/IB2007/051246
(87) International publication number: WO 2007/116363

(56) References cited:
- EP-A- 0 746 050
- WO-A-2006/131873
- US-A- 4 857 423
- US-A- 4 869 977
- US-A- 5 536 599
- BUHRMESTER ET AL: "Phenothiazine Molecules" JOURNAL OF THE ELECTROCHEMICAL SOCIETY, vol. 153, no. 2, 23 December 2005 (2005-12-23), pages A288-A294, XP002396171

## Description

### FIELD OF THE INVENTION

This invention concerns electrochemically addressable lithium insertion electrode systems for electrochemical cells using non-aqueous organic electrolytes, quasi-solid gel electrolytes, solid electrolytes, or the like and in particular the use of said electrolytes in combination with porous electrode materials, i.e. doped or non-doped nanoparticles or sub-microparticles of lithium insertion materials and redox active compounds in the electrolyte. This invention also concerns the configuration of the electrochemical cell containing the redox active compounds.

### STATE OF THE ART

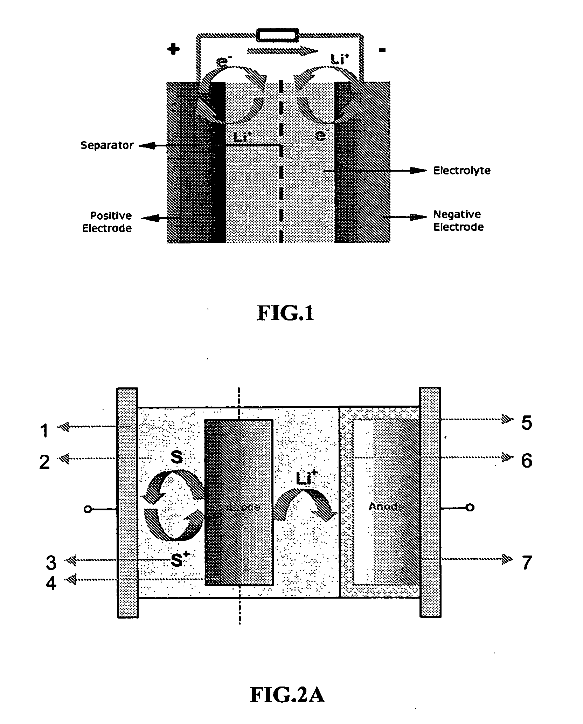

Electrochemical cells, as illustrated in FIG.1, have used lithium insertion materials by adding conductive additive, i.e. carbon black, carbon fiber, graphite, or mixture of them to improve the electronic conductivity of the electrode films.

The lithium insertion materials in commercial electrochemical cells comprise 2∼25 wt. %, typically 10 wt. % conductive additives. These conductive agents do not participate in the redox reactions and therefore represent inert mass reducing the specific energy storage capacity of the electrode. This situation is especially severe as the lithium insertion material or its de-intercalated state has very poor electronic conductivity.

For instance, pioneering work by Padhi et al (J. Electrochem. Soc. 144, 1188 (1997*)*.) first demonstrated reversible extraction of Li from the divine-structured LiFePO₄, however 25 wt.% acetylene black was added. This is also illustrated in JP 2000-294238 A2 wherein a LiFePO₄/Acetylene Black ratio of 70 /25 is used.

US Pat. No.6235182 and WO Pt. No. 9219092 disclose a method for coating insulators with carbon particles by substrate-induced coagulation. This method involves the adsorption of polyelectrolyte compound and subsequent coagulation of carbon particle on the substrate to form an adhesive carbon coating. For high quality carbon coating, the size of carbon particle is very dependent on the dimension of substrate and the amount of carbon used is still remarkable.

International patent application WO 2004/001881 discloses a new route for the synthesis of carbon-coated powders having the olivine or NASICON structure by mixing the precursors of carbon and said materials and subsequent calcinations. Nevertheless, it is still necessary to have 4∼8 wt. % of coated carbon to exploit the invention fully.

US Pat. No.4857423 features the use of redox shuttle reagents, such as ferrocene, butylferrocene, etc., in non-aqueous electrolytes to provide overcharge protection for cells having alkali metal negative electrodes. However this method does not achieve high potential and stability.

### SUMMARY OF THE INVENTION

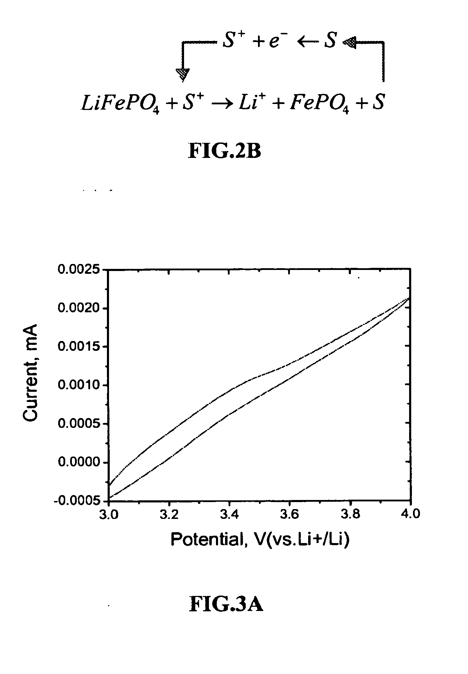

It has been discovered that the presence of some redox active compounds in the electrolyte forms an electrochemically addressable electrode system. As illustrated in FIG.2, for a cathodic lithium insertion material and a p-type redox active compound (S) dissolved in the electrolyte of cathodic compartment, upon positive polarization the p-type redox active compound will be oxidized at current collector and charges (holes) will be transported from the current collector to the lithium insertion material by the diffusion of the oxidized p-type redox active compound (S+). As the redox potential of the p-type redox active compound is higher or matches closely the Fermi level of the lithium insertion material, S+ will be reduced by the lithium insertion material. Electrons and lithium ions will be withdrawn from it during battery charging. By contrast, during the discharging process, the oxidized species are reduced at current collector and charges (electrons) are transported from the current collector to the lithium insertion material by the diffusion of p-type redox active compound (S). Lithium ions and electrons are injected into the solid, as the redox potential of the p-type redox active compound is lower or matches closely the Fermi level of the lithium insertion material.

The cell is composed of two compartments, where the cathodic compartment comprises a cathodic lithium insertion material and p-type redox active compound(s) in the electrolyte; the anodic compartment comprises an anodic lithium insertion material and n-type redox active compound(s) in the electrolyte. These two compartments are separated by a separator and the redox active compounds are confined only in each compartment.

Compared to the whole electrode system, the redox active compounds do not occupy any extra volume of the whole electrode system. Hence with respect to prior art, the present invention allows reducing greatly the volume of the conductive additives resulting in a much improved energy storage density.

It is therefore an object of the invention to provide a means to avoid or minimize the amount of the conductive additives required for the operation of an ion insertion battery. It is also an object of the invention to provide a rechargeable electrochemical cell having higher energy density.

The invention relates therefore to a rechargeable electrochemical cell as defined in the claims.

### DEFINITIONS

As used herein, the term "lithium insertion material" refers to the material which can host and release lithium ions reversibly. If the materials lose electrons upon charging, they are referred to as "cathodic lithium insertion material". If the materials acquire electrons upon charging, they are referred to as "anodic lithium insertion material".

As used herein, the term "p-type redox active compound" refers to those compounds that present in the electrolyte of cathodic compartment of the cell, and act as molecular shuttles transporting charges between current collector and cathodic lithium insertion material upon charging/discharging. On the other hand, the term "n-type redox active compound" refers to the molecules that present in the electrolyte of anodic compartment of the cell, and act as molecular shuttles transporting charges between current collector and anodic lithium insertion material upon charging/discharging.

### DETAILED DESCRIPTION OF THE INVENTION

The invention will be better understood below with a detailed description including different embodiments.

This is illustrated by the following figures :
**FIG.1** shows a schematic sectional view of the prior art rechargeable electrochemical cell during discharging process:
**FIG.2A** shows the schematic working principle of the electrochemical cell upon charging with p-type redox active compound in the cathodic compartment. 1: cathodic current collector; 2: electrolyte in cathodic compartment; 3: p-type redox active compound; 4: cathodic lithium insertion material; 5: anodic current collector; 6: separator; 7: anodic lithium insertion material.
**FIG.2B** reactions involved in the cathodic compartment of the cell upon charging.
**FIG.3A** shows cyclic voltammograms of bare LiFePO₄ electrode in ethylene carbonate (EC) + ethyl methyl carbonate (EMC)/ 1M LiPF₆ electrolyte. The counter and reference electrodes are lithium foils. The scan rate is 5mV/s.
**FIG.3B** shows cyclic voltammograms of LiFePO₄ electrode in the presence of 0.1 M MPTZ in EC+EMC/ 1M LiPF₆ electrolyte. The counter and reference electrodes are lithium foils. The scan rate is 5mV/s.
**FIG.3C** shows cyclic voltammograms of LiFePO₄ electrode in the presence of 4 mM Os(mobpy)₃Cl₂ and Os(mbpy)₃Cl₂ in EC+EMC /1M LiPF₆ electrolyte. The counter and reference electrodes are lithium foils. The scan rates are indicated in the figure.
**FIG.4** shows the voltage profiles of LiFePO₄ electrode in the presence of 0.032 M Os(mobpy)₃Cl₂ and Os(mbpy)₃Cl₂ in EC+EMC /1M LiPF₆ electrolyte. The current is 0.03 mA.

### REDOX ACTIVE COMPOUNDS

As illustrated in FIG.2A, a p-type redox active compound is dissolved in the electrolyte, which is confined in the cathodic compartment of the cell by a separator. Upon charging the cell, the p-type redox active compound will be oxidized at current collector and charges (holes) will be transported from the current collector to the lithium insertion material by the diffusion of the oxidized p-type redox active compound (S+). This allows for electrochemical polarization of the whole particle network by the current collector even though the lithium insertion material is electronically insulating and no carbon additive is used to promote conduction. As the redox potential of the p-type redox active compound is higher or matches closely the potential of the lithium insertion material, S+ will be reduced by the lithium insertion material. Electrons and lithium ions will be withdrawn from it during battery charging as illustrated in FIG.2B. By contrast, during the discharging process, the oxidized species are reduced at current collector and charges (electrons) are transported from the current collector to the lithium insertion material by the diffusion of p-type redox active compound (S). Lithium ions and electrons are injected into the solid, as the redox potential of the p-type redox active compound is lower or matches closely the potential of the lithium insertion material. More specifically during the charging of the battery, electrons and lithium ions are withdrawn from the lithium insertion compound while during the discharge process they are reinserted into the same material. An analogous mechanism is operative during discharging or charging of a lithium insertion material functioning as anode, the n-type redox active compound conducting electrons in this case.

The relevant materials used in the cathodic electrode system comprise a cathodic lithium insertion material and a p-type redox active compound dissolved in the electrolyte of the cathodic compartment.

Preferred cathodic lithium insertion materials used herein are:
Doped or non-doped oxides LiMO₂ where M is one or more elements selected from M=Co, Ni, Mn, Fe, W, V, LiV₃O₈ or mix of them; phosphor-olivines as LiMPO₄ where M is one or more elements selected from M= Fe, Co, Mn, Ni, VO, Cr and mix of them and spinels and mixed spinels as LiₓMn₂O₄ or Li₂CoₓFe_{y}Mn_{z}O₈, etc., nano- or sub-microparticles. The particle size ranges from 10 nm to 10 micrometer, preferably 10∼1000 nm.

Preferred p-type redox active compounds have the following structure: 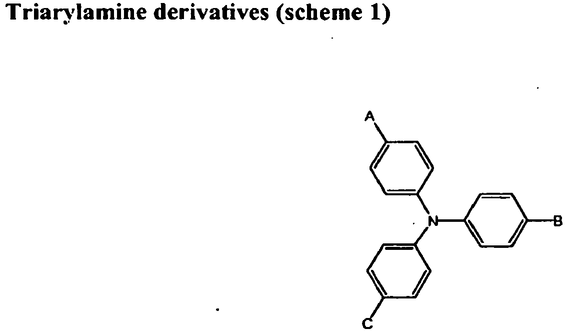
A, B, C can be
F or Cl or Br I or NO₂ or COOR or R or CF₃ or COR or OCH₃ or H
R= Alkyl (C₁ to C₂₀)

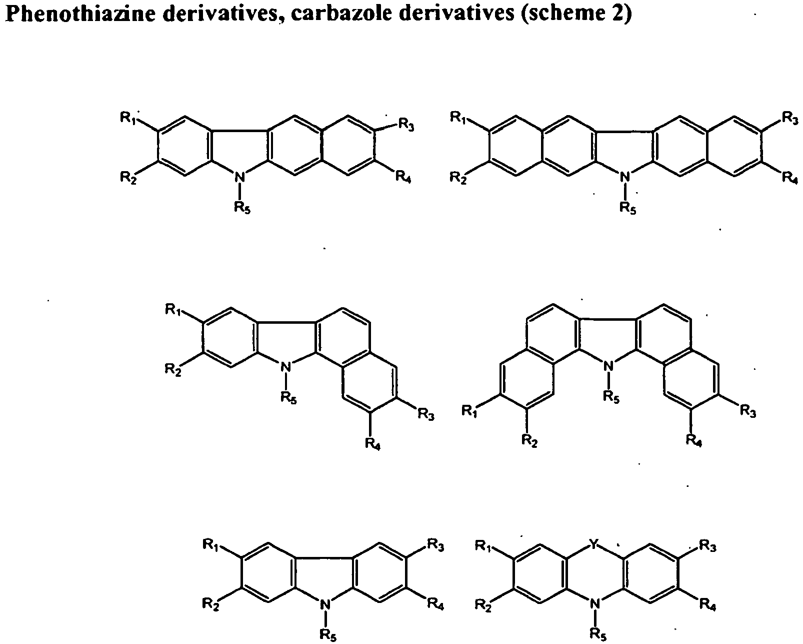

Y= N or O or S
R₁, R₂, R₃, R₄ can be
F or Cl or Br or I or NO₂ or COOR or Alkyl (C₁ to C₂₀) or CF₃ or COR or OR₅ or H
R₅= Alkyl (C₁ to C₂₀) or H

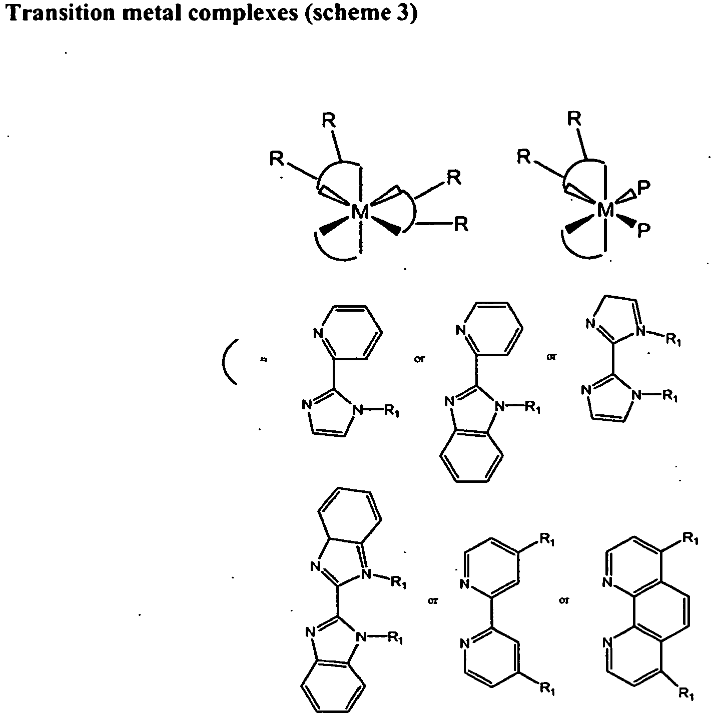

M= Fe or Ru or Os
n= 0 to 20
R₁= COOR' or COR' or CF₃ or OR' or NO₂ or F or Cl or Br or I or NR'₂ or R'
R'= alkyl (C₁ to C₂₀) or H
P= F or Cl or Br or I or NO₂ or CN or NCSe or NCS or NCO

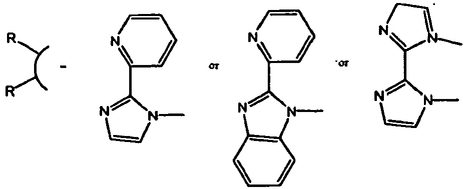

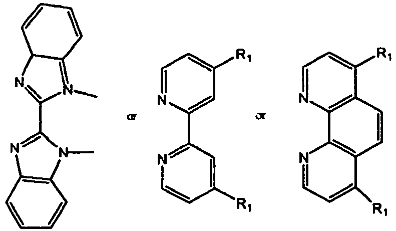

R₁= COOR or COR or CF₃ or OR' or NO₂ or F or Cl or Br or I or NR'₂ or R'
R'= alkyl (C₁ to C₂₀) or H

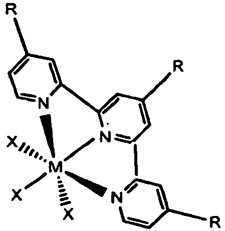

M= Fe or Ru or Os
X= F or Cl or Br or I or NO₂ or CN or NCSe or NCS or NCO
R= F or Cl or Br or I or NO₂ or COOR' or R' or CF₃ or COR' or OR' or NR'₂
R'= alkyl (C₁ to C₂₀) or H

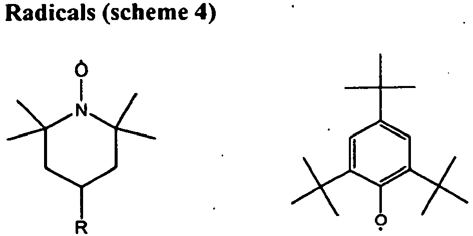

R= F or Cl or Br or I or NO₂ or COOR' or R' or CF₃ or COR' or OR' or NR'₂
R'= alkyl (C₁ to C₂₀) or H

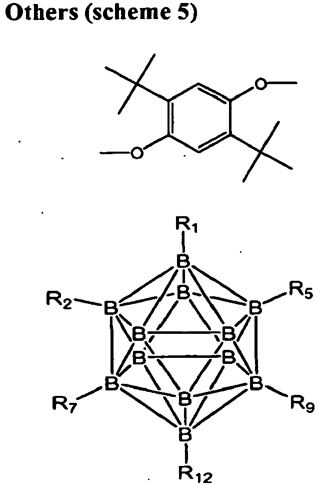

B₁₂R¹R²R³R⁴R⁵R⁶R⁷R⁸R⁹R¹⁰R¹¹R¹²
R¹, R², R³, R⁴, R⁵, R⁶, R⁷, R⁸, R⁹, R¹⁰, R¹¹, R¹² can be
R= F or Cl or Br or I or NO₂ or COOR' or R' or CF₃ or COR' or OR' or NR'₂
R'= alkyl (C₁ to C₂₀) or H

The relevant materials used in the anodic electrode system comprise an anodic lithium insertion material and an n-type redox active compound dissolved in the electrolyte of the anodic compartment.

Preferred anodic lithium insertion materials used herein are:
Doped or non-doped TiO₂, SnO₂, SnO, Li₄Ti₅O₁₂ nano- or sub-microparticles. The particle size ranges from 10nm to 10 micrometer, preferably 10∼500 nm.

Preferred n-type redox active compounds have the following structure:

### Transition metal complexes (see above, scheme 3),

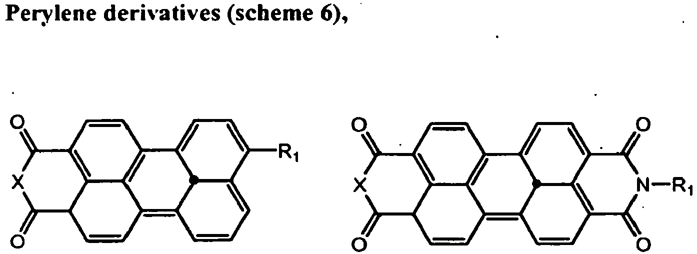

X=O or NCH2R
R1=H or C1 to C20
   or
X= 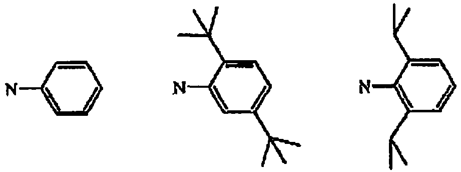
R1=NHCH2R
R= alkyl (C₁ to C₂₀) or H

The separator used herein can be solid electrolyte-fast lithium ion conductor, such as Lithium Phosphorus Oxynitride (LiPON), 70Li₂S·30P₂S₅, etc. or ceramic nanofiltration membrane, which allows the transport of lithium ions through it, but prohibits the permeation of the redox active compounds.

In one embodiment of the invention, the rechargeable electrochemical cell comprises:
(a) A first electrode compartment comprising cathodic electrode, electrolyte with p-type redox active compound dissolved therein. The cathodic electrode comprises cathodic Lithium insertion material, binder, conductive additives.
(b) A second electrode compartment comprising anodic electrode, electrolyte with n-type redox active compound dissolved therein. The anodic electrode comprises anodic lithium insertion material, binder, conductive additives.
(c) A separator intermediate the two electrode compartments.

In a preferred embodiment, the rechargeable electrochemical cell according to the invention comprises:
(a) A first electrode compartment comprising cathodic electrode, electrolyte with p-type redox active compound dissolved therein.
(b) A second counter electrode with n-type redox active compound dissolved therein comprising binder, conductive additives, and anodic lithium insertion material such as carbon, TiO₂, Li₄Ti₅O₁₂, SnO₂, SnO, SnSb alloy, Si, etc.
(c) A separator intermediate the two electrode compartments.

In a particularly preferred embodiment of the rechargeable electrochemical cell of the present invention, the cathodic electrode comprising binder, conductive additives, and doped or non-doped LiMPO₄, wherein M=Fe, Mn, Co in first electrode compartment, having p-type redox active compound dissolved therein; and the second electrode comprising binder, conductive additives, and anodic lithium insertion material.
In this embodiment, the electronic conductivity of the cathodic lithium insertion materials is very poor, and the presence of p-type redox active compound makes the treated electrode system much more electrochemically addressable.

The following examples illustrate the production of the cathodes used as part of the present invention.

### EXAMPLE 1

LiFePO₄ powder with particle size distribution of 200∼700nm was mixed with PVDF in weight ratio of 95:5. A 1.0cm× 1.0cm electrode sheet comprising 10µm thick same was used as working electrode, with lithium foil as counter and reference electrodes for electrochemical test. The three electrodes were separated to three compartments by glass frits and filled with EC+DMC (1:1)/1M LiPF₆ electrolyte. In the LiFePO₄ electrode compartment, 0.1M MPTZ was dissolved therein.

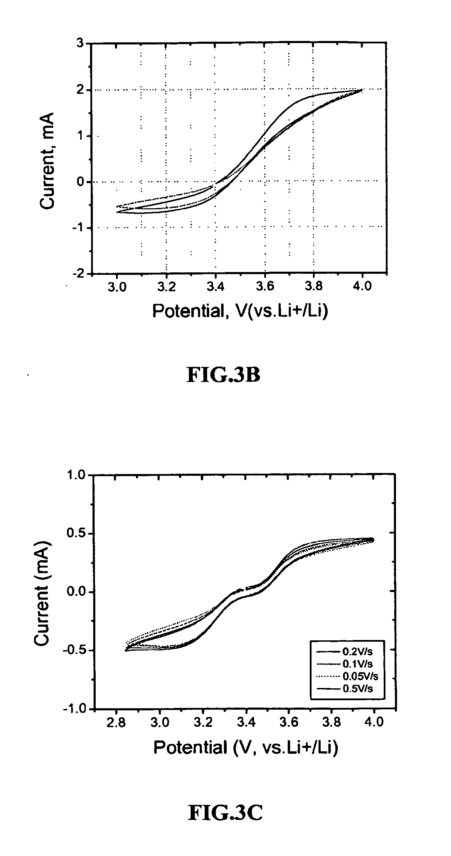

FIG.3B shows the cyclic voltammograms (CV) of the electrode system. Because the reaction in FIG. 2B is turned on at around 3.5V (vs. Li+/Li), MPTZ is oxidized at current collector and diffuse to LiFePO₄, where the oxidized MPTZ is reduced by LiFePO₄ since the local equilibrium potential of MPTZ is slightly higher than that of LiFePO₄. Electrons and lithium ions are withdrawn from it. And the CV shows steady-state like curve. During inverse process, analogue process occurs. The limiting currents are 1.9 mA/cm² for charging and 0.7 mA/cm² for discharging. In comparison, LiFePO₄ electrode sheet without p-type redox active compound is almost inactive as shown in FIG.3A.

### EXAMPLE 2

LiFePO₄ powder with particle size distribution of 200∼700nm was mixed with PVDF and acetylene black in weight ratio of 95:5. A 1.0cm × 1.0cm electrode sheet comprising 10µm thick same was used as working electrode, with lithium foil as counter and reference electrodes for electrochemical test. The three electrodes were separated to three compartments by glass frits and filled with EC+DMC (1:1)/1M LiPF₆ electrolyte. In the LiFePO₄ electrode compartment, 0.032 M Os(mobpy)₃Cl₂ and Os(mbpy)₃Cl₂ was dissolved therein. The volume of electrolyte in cathodic compartment is 30 µl.
FIG.3C shows the CV of the electrode system at different scan rates. The finite length diffusion of the compound within the electrode film renders the limiting current being independent of the scan rates. As the potential is higher than 3.55V (vs.Li+/Li), both Os complexes are oxidized at current collector. Charges (holes) are transported from the current collector to LiFePO₄ by the diffusion of the oxidized Os(mbpy)₃Cl₂. Since its potential is higher than that of LiFePO₄, the oxidized Os(mbpy)₃Cl₂ is reduced by LiFePO₄. Electrons and lithium ions will be withdrawn from it as illustrated in FIG.2B. And it shows steady-state like curve. During inverse process, as the potential is lower than 3.3V, both complexes are reduced at current collector. Charges (electrons) are transported from the current collector to LiFePO₄ by the diffusion of the oxidized Os(mobpy)₃Cl₂. Since its potential is lower than that of LiFePO₄, the reduced Os(mobpy)₃Cl₂ is oxidized by LiFePO₄. Electrons and lithium ions will be injected into it.

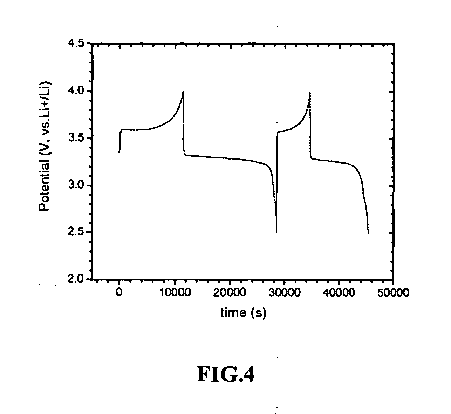

FIG.4 shows the voltage profiles of the cell at a constant current of 0.03 mA. The charging/discharging voltage plateaus show that the concept is working well.

## Claims

1. A rechargeable electrochemical cell with improved energy density comprising cathodic and anodic lithium insertion materials with p- and n-type redox active compounds, said electrochemical cell comprising two compartments separated by a separating element, the first compartment containing said cathodic lithium insertion material and said p-type redox active compounds dissolved in an electrolyte, the second compartment containing said anodic lithium insertion material and said n-type redox active compound dissolved in an electrolyte, said separating element being permeable for lithium ions and impermeable for said p-or n-type redox active compounds.

2. A rechargeable electrochemical cell according to claim 1 wherein:
(a) The first oxidation potential of the p-type redox active compound matches at least the cathodic lithium insertion material, the cathodic electrode comprising cathodic lithium insertion material, binder, conductive additives.
(b) The first reduction potential of the n-type redox active compound matches at least the anodic lithium insertion material, the anodic electrode comprising anodic lithium insertion material, binder, conductive additives.

3. A rechargeable electrochemical cell according to claim 2, wherein the nano- or sub-micrometer sized cathodic lithium insertion material is selected from doped or non-doped oxides LiMO₂ where M is one or more elements selected from M = Co, Ni, Mn, Fe, W, V, LiV₃O₈ and mix of them; phosphor-olivines as LiMPO₄ where M is one or more elements selected from with M = Fe, Co, Mn, Ni, VO, Cr and mix of them and spinels and mixed spinels as LiₓMn₂O₄ or Li₂₁CoₓFe_{y}Mn_{z}O₈.

4. A rechargeable electrochemical cell according to claim 2, wherein the nano- or sub-micrometer sized anodic lithium insertion material is selected from carbon, TiO₂, Li₄Ti₅O₁₂, SnO₂, SnO, Si.

5. A rechargeable electrochemical cell according to claim 2, wherein the particle size of the lithium insertion materials ranges from 10nm to 10µm.

6. A rechargeable electrochemical cell according to claim 2, wherein the separating element is Lithium Phosphorus Oxynitride (LiPON) or 70Li₂S·30P₂S₅, or a ceramic ultrafiltration membrane whose pore radius is selected such that it is impermeable to the redox active compound but permeable to the smaller lithium ions, or a perforated polymer membrane made whose pores have again a specific size to allow passage of lithium ions but to prevent the permeation of the redox active compound.

7. A rechargeable electrochemical cell according to any of the preceding claims, wherein the p-type redox active compound has the following structure: 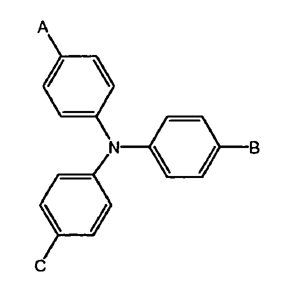
wherein, A, B, C = F, Cl, Br, I, NO₂, COOR, R, CF₃, COR, OCH₃ or H;
and R = alkyl (C₁ to C₂₀)

8. A rechargeable electrochemical cell according to claims 1-6, wherein the p-type redox active compound is selected from the structures of formula 2-7: 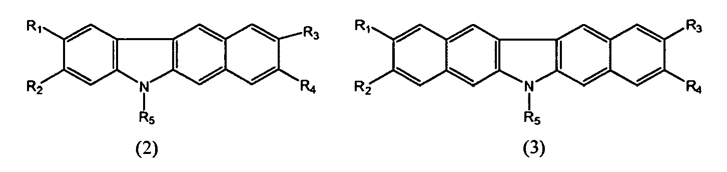 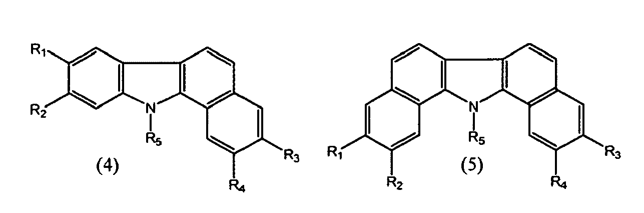 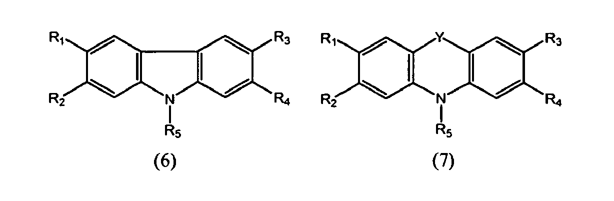
wherein, Y = N, O or S;
R₁, R₂, R₃, R₄ = F, Cl, Br, I, NO₂, COOR, Alkyl (C₁ to C₂₀), CF₃, COR, OR₅ or H;
and R = Alkyl (C₁ to C₂₀) or H.

9. A rechargeable electrochemical cell according to claims 1-6, wherein the p-type redox active compound is selected from the structures of formula 8-9: 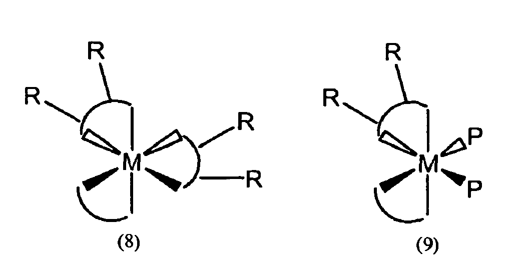 wherein, 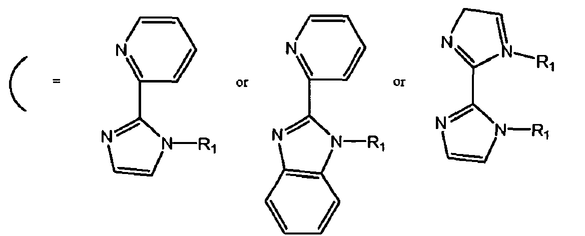 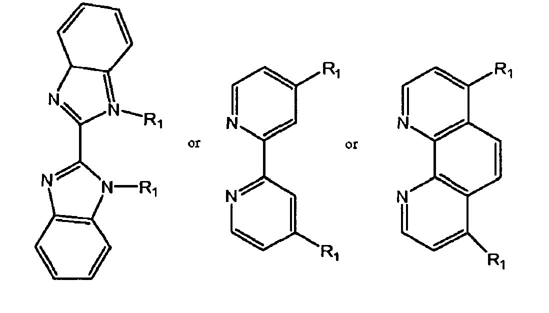 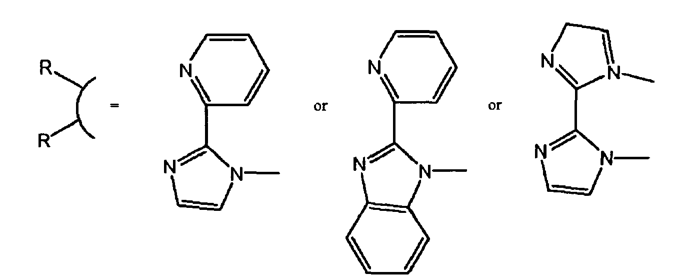 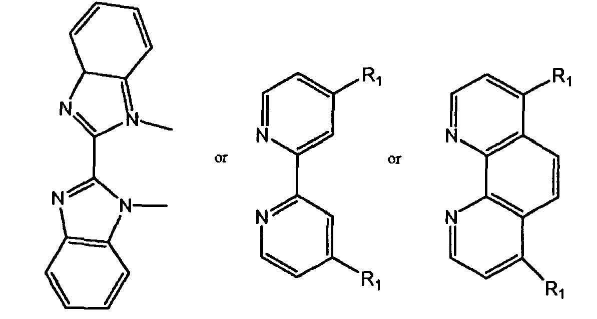
M = Fe, Ru or Os;
R₁ = COOR', COR', CF₃, OR', NO₂, F, Cl, Br, I, NR'₂ or R';
R' = alkyl (C₁ to C₂₀) or H;
and P = F, Cl, Br, I, NO₂, CN, NCSe, NCS or NCO

10. A rechargeable electrochemical cell according to claims 1-6, wherein the p-type redox active compound has the following structure: 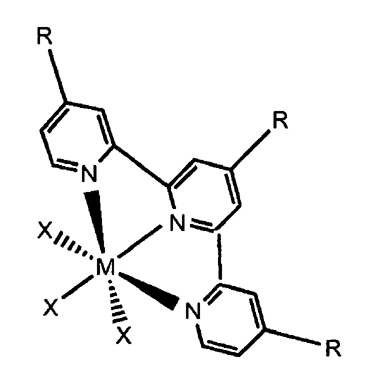
wherein, M = Fe, Ru or Os;
R = COOR', COR', CF₃, OR', NO₂, F, Cl, Br, I, NR'₂ or R';
R' = alkyl (C₁ to C₂₀) or H;
and X = F, Cl, Br, I, NO₂, CN, NCSe, NCS or NCO

11. A rechargeable electrochemical cell according to claims 1-6, wherein the p-type redox active compound is selected from the structures of formula (11-12) given below: 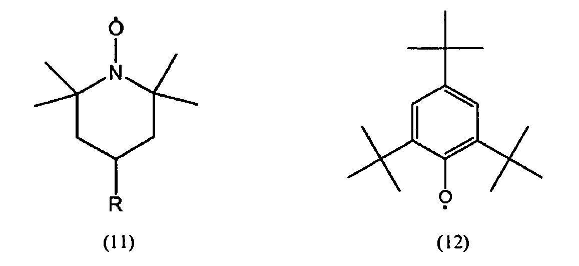
wherein, R = COOR', COR', CF₃, OR', NO₂, F, Cl, Br, I, NR'₂ or R';
and R' = alkyl (C₁ to C₂₀) or H

12. A rechargeable electrochemical cell according to claims 1-6, wherein the p-type redox active compound is selected from the structures of formula (13-14) given below: 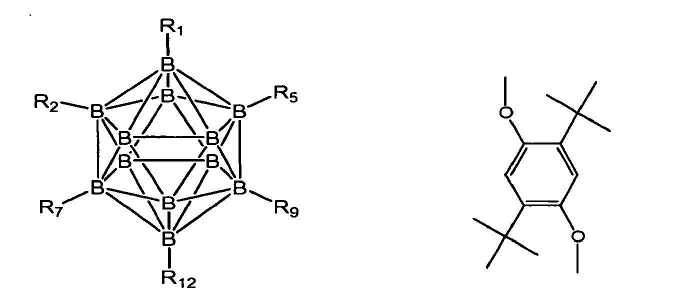
(B₁₂R¹R²R³R⁴R⁵R⁶R⁷R⁸R⁹R¹⁰R¹¹ R¹²)
wherein, R¹, R², R³, R⁴, R⁵, R⁶, R⁷, R⁸, R⁹, R¹⁰, R¹¹, R¹² can be COOR', COR', CF₃, OR', NO₂, F, Cl, Br, I, NR'₂ or R';
and R' = alkyle (C₁ to C₂₀) or H.

13. A rechargeable electrochemical cell according to claims 1-6, wherein the n-type redox active compound is selected from the structures of formula (15-16) given below: 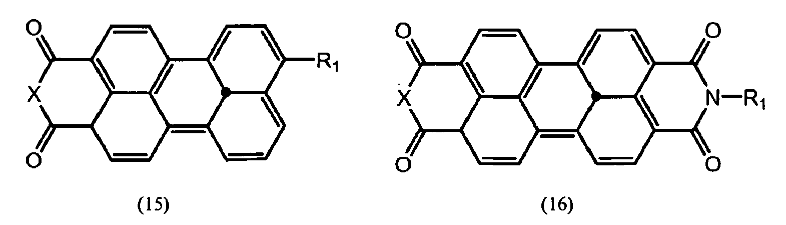
wherein, X = O or NCH₂R;
and R₁ = alkyl (C₁ to C₂₀) or H.

14. A rechargeable electrochemical cell according to claims 1-6, wherein the n-type redox active compound is selected from the structures of formula (17-18) given below: 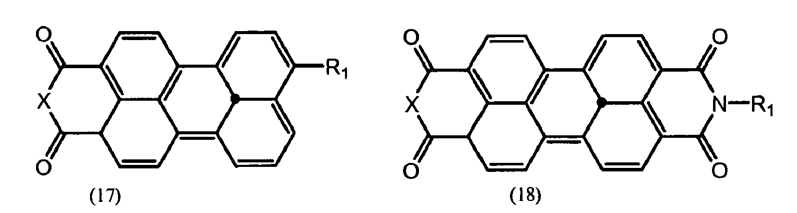 wherein,
X= 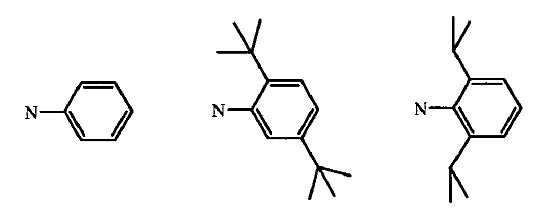
R₁ = NHCH₂R;
and R = alkyl (C₁ to C₂₀) or H.

## Patentansprüche

1. Wiederaufladbare elektrochemische Zelle mit verbesserter Energiedichte, umfassend kathodische und anodische Lithium-Einlagematerialien mit p- und n-leitenden redoxaktiven Verbindungen, wobei die elektrochemische Zelle zwei durch ein Trennelement getrennte Kammern umfasst, wobei die erste Kammer das kathodische Lithium-Einlagematerial und die in einem Elektrolyten gelösten p-leitenden redoxaktiven Verbindungen enthält, wobei die zweite Kammer das anodische Lithium-Einlagematerial und die in einem Elektrolyten gelöse n-leitende redoxaktive Verbindung enthält, wobei das Trennelement für Lithiumionen durchlässig ist und für die p- oder n-leitenden redoxaktiven Verbindungen undurchlässig ist.

2. Wiederaufladbare elektrochemische Zelle nach Anspruch 1, wobei
(a) das erste Oxidationspotential der p-leitenden redoxaktiven Verbindung mindestens dem kathodischen Lithium-Einlagematerial entspricht, wobei die kathodische Elektrode ein kathodisches Lithium-Einlagematerial, ein Bindemittel und leitfähige Zusatzstoffe umfasst;
(b) das erste Reduktionspotential der n-leitenden redoxaktiven Verbindung mindestens dem anodischen Lithium-Einlagematerial entspricht, wobei die anodische Elektrode ein anodisches Lithium-Einlagematerial, ein Bindemittel und leitfähige Zusatzstoffe umfasst.

3. Wiederaufladbare elektrochemische Zelle nach Anspruch 2, wobei das kathodische Lithium-Einlagematerial mit einer Größe im Nano- oder Submikrometerbereich aus dotierten oder nicht-dotierten Oxiden LiMO₂ ausgewählt ist, wo M ein oder mehrere Elemente ist, die ausgewählt sind aus M = Co, Ni, Mn, Fe, W, V, LiV₃O₈ und einer Mischung davon; Phosphorolivinen wie zum Beispiel LiMPO₄, wo M ein oder mehrere Elemente ist, die aus M = Fe, Co, Mn, Ni, VO, Cr und einer Mischung davon sowie aus Spinellen und gemischten Spinellen wie zum Beispiel LiₓMn₂O₄ oder Li₂CoₓFe_{y}Mn_{z}O₈ ausgewählt sind.

4. Wiederaufladbare elektrochemische Zelle nach Anspruch 2, wobei das anodische Lithium-Einlagematerial mit einer Größe im Nano- oder Submikrometerbereich aus Kohlenstoff, TiO₂, L₁₄T₁₅O₁₂, SnO₂, SnO und Si ausgewählt ist.

5. Wiederaufladbare elektrochemische Zelle nach Anspruch 2, wobei die Teilchengröße der Lithium-Einlagematerialien im Bereich von 10 nm bis 10 µm liegt.

6. Wiederaufladbare elektrochemische Zelle nach Anspruch 2, wobei es sich bei dem Trennelement um Lithiumphosphoroxynitrid (LiPON) oder 70Li₂S·30P₂S₅ oder eine keramische Ultrafiltrationsmembran handelt, deren Porenradius so gewählt ist, dass sie für die redoxaktive Verbindung undurchlässig ist, für die kleineren Lithiumionen aber durchlässig ist, oder um eine perforierte Polymermembran, deren Poren wieder eine spezielle Größe haben, die den Durchtritt von Lithiumionen erlaubt, den Durchtritt der redoxaktiven Verbindung aber verhindert.

7. Wiederaufladbare elektrochemische Zelle nach einem der vorhergehenden Ansprüche, wobei die p-leitende redoxaktive Verbindung die folgende Struktur hat: 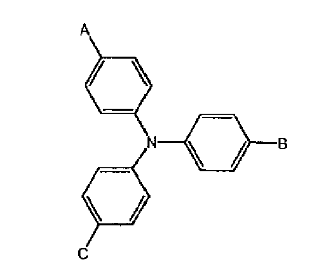
worin A, B, C = F, Cl, Br, I, NO₂, COOR, R, CF₃, COR, OCH₃ oder H;
und R = Alkyl (C₁ bis C₂₀).

8. Wiederaufladbare elektrochemische Zelle nach Anspruch 1-6, wobei die p-leitende redoxaktive Verbindung ausgewählt ist aus den Strukturen der Formeln 2-7: 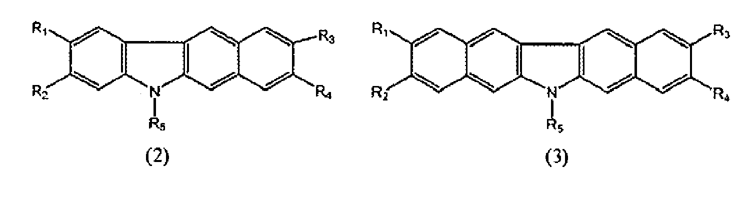 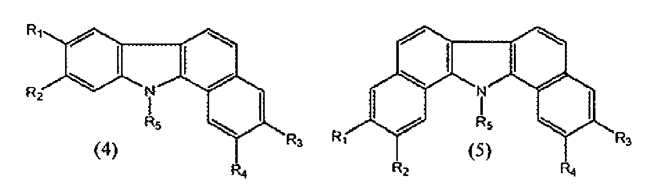 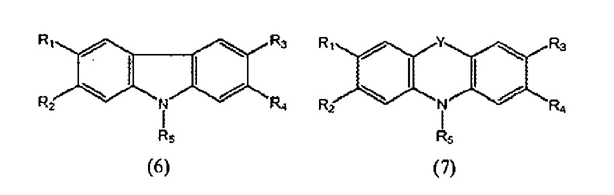
worin Y = N, O oder S;
R₁, R₂, R₃, R₄ = F, Cl, Br, I, NO₂, COOR, Alkyl (C₁ bis C₂₀), CF₃, COR, OR₅ oder H;
und R = Alkyl (C₁ bis C₂₀) oder H.

9. Wiederaufladbare elektrochemische Zelle nach Anspruch 1-6, wobei die p-leitende redoxaktive Verbindung ausgewählt ist aus den Strukturen der Formeln 8-9: 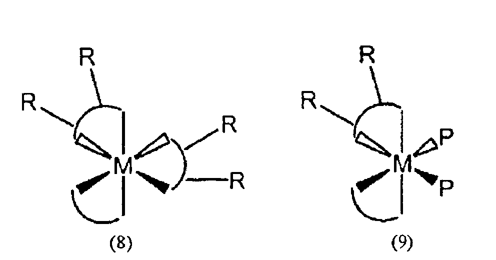 wobei, 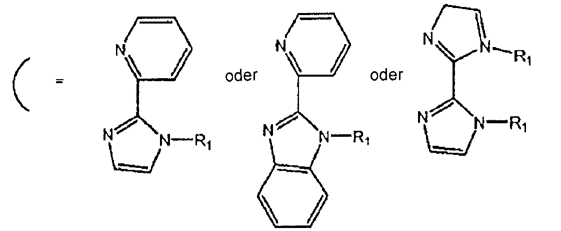 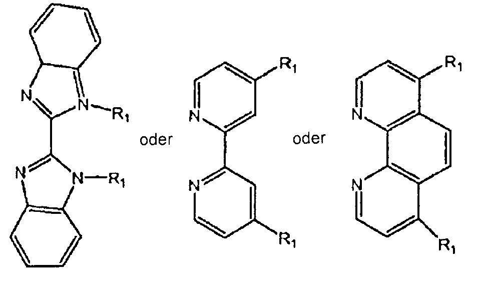 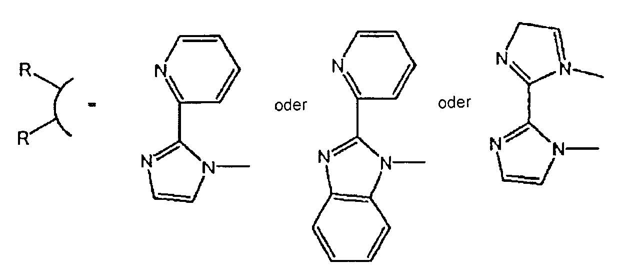 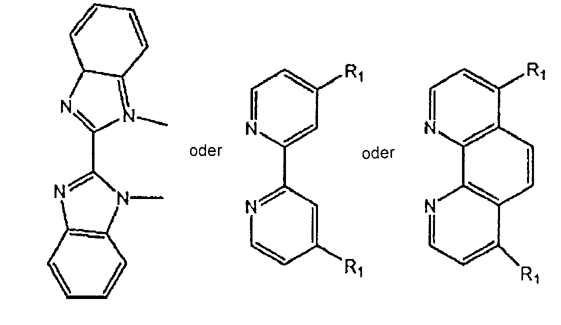
M = Fe, Ru oder Os;
R₁ = COOR', COR', CF₃, OR', NO₂, F, Cl, Br, I, NR'₂ oder R';
R' = Alkyl (C₁ bis C₂₀) oder H;
und P = F, Cl, Br, I, NO₂, CN, CNSe, NCS oder NCO.

10. Wiederaufladbare elektrochemische Zelle nach Anspruch 1-6, wobei die p-leitende redoxaktive Verbindung die folgende Struktur hat: 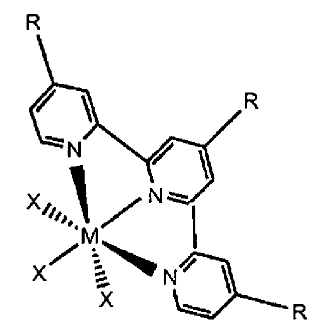
worin M = Fe, Ru oder Os;
R = COOR', COR', CF₃, OR', NO₂, F, Cl, Br, I, NR'₂ oder R';
R' = Alkyl (C₁ bis C₂₀) oder H;
und X = F, Cl, Br, I, NO₂, CN, NCSe, NCS oder NCO.

11. Wiederaufladbare elektrochemische Zelle nach Anspruch 1-6, wobei die p-leitende redoxaktive Verbindung ausgewählt ist aus den Strukturen der nachfolgend angegebenen Formeln (11-12): 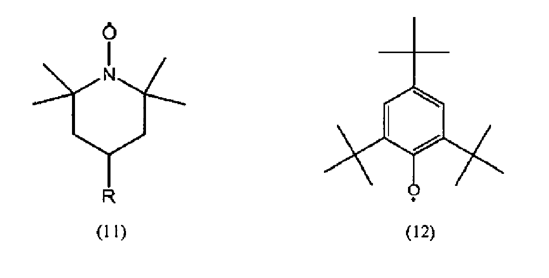
worin R = COOR', COR', CF₃, OR', NO₂, F, Cl, Br, I, NR'₂ oder R';
und R' = Alkyl (C₁ bis C₂₀) oder H.

12. Wiederaufladbare elektrochemische Zelle nach Anspruch 1-6, wobei die p-leitende redoxaktive Verbindung ausgewählt ist aus den Strukturen der nachfolgend angegebenen Formeln (13-14): 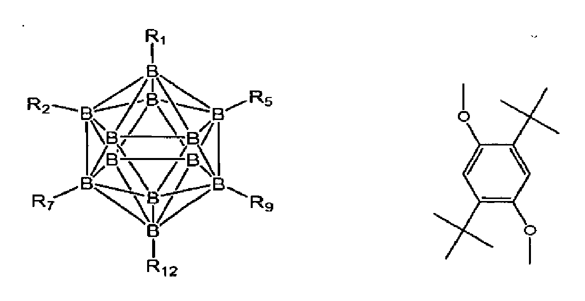
(B₁₂R¹R²R³R⁴R⁵R⁶R⁷R⁸R⁹R¹⁰R¹¹R¹²)
worin R¹, R², R³, R⁴, R⁵, R⁶, R⁷, R⁸, R⁹, R¹⁰, R¹¹ R¹² für COOR', COR', CF₃, OR', NO₂, F, Cl, Br, I, NR'₂ oder R' stehen können;
und R' = Alkyl (C₁ bis C₂₀) oder H.

13. Wiederaufladbare elektrochemische Zelle nach Anspruch 1-6, wobei die n-leitende redoxaktive Verbindung ausgewählt ist aus den Strukturen der nachfolgend angegebenen Formeln (15-16): 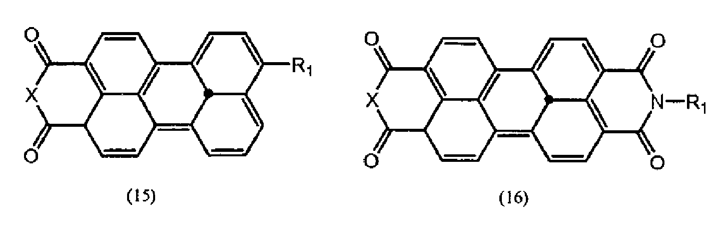
worin X = O oder NCH₂R;
und R₁ = Alkyl (C₁ bis C₂₀) oder H.

14. Wiederaufladbare elektrochemische Zelle nach Anspruch 1-6, wobei die n-leitende redoxaktive Verbindung ausgewählt ist aus den Strukturen der nachfolgend angegebenen Formeln (17-18): 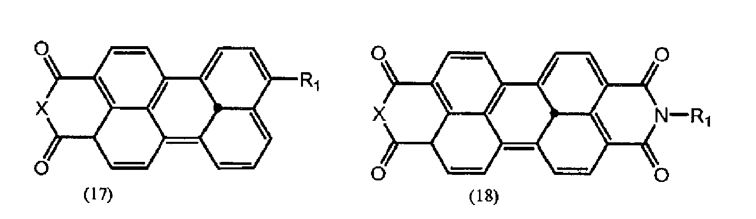 worin
X= 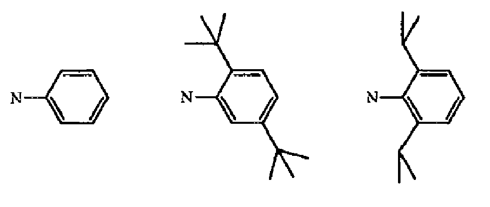
R₁ = NHCH₂R;
und R = Alkyl (C₁ bis C₂₀) oder H.

## Revendications

1. Pile électrochimique rechargeable, présentant une densité d'énergie améliorée, comprenant des matériaux cathodique et anodique à insertion de lithium, ainsi que des composés à activité redox de type p et de type n, laquelle pile électrochimique comporte deux compartiments séparés par un élément séparateur, dont le premier contient ledit matériau cathodique à insertion de lithium et ledit composé à activité redox de type p dissous dans un électrolyte tandis que le deuxième contient ledit matériau anodique à insertion de lithium et ledit composé à activité redox de type n dissous dans un électrolyte, et lequel élément séparateur est perméable aux ions lithium et imperméable auxdits composés à activité redox de type p et de type n.

2. Pile électrochimique rechargeable, conforme à la revendication 1, dans laquelle :
a) le premier potentiel d'oxydation du composé à activité redox de type p correspond au moins à celui du matériau cathodique à insertion de lithium, et la cathode comprend le matériau cathodique à insertion de lithium, un liant et des adjuvants conducteurs ;
b) et le premier potentiel de réduction du composé à activité redox de type n correspond au moins à celui du matériau anodique à insertion de lithium, et l'anode comprend le matériau anodique à insertion de lithium, un liant et des adjuvants conducteurs.

3. Pile électrochimique rechargeable, conforme à la revendication 2, dans laquelle le matériau cathodique à insertion de lithium, de taille nanométrique ou submicrométrique, est choisi parmi les oxydes, dopés ou non dopés, de formule LiMO₂ où M représente un ou plusieurs éléments choisis parmi les cobalt, nickel, manganèse, fer, tungstène et vanadium, l'oxyde LiV₃O₈, les mélanges de ces oxydes, les olivines au phosphore de formule LiMPO₄ où M représente un ou plusieurs éléments choisis parmi les fer, cobalt, manganèse, nickel et chrome et le fragment vanadyle VO, les mélanges de ces olivines, et les spinelles et spinelles mixtes, tels ceux de formule LiₓMn₂O₄ ou Li₂CoₓFe_{y}Mn_{z}O₈.

4. Pile électrochimique rechargeable, conforme à la revendication 2, dans laquelle le matériau anodique à insertion de lithium, de taille nanométrique ou submicrométrique, est choisi parmi le carbone, le silicium et les corps de formules TiO₂, Li₄Ti₅O₁₂, SnO₂ et SnO.

5. Pile électrochimique rechargeable, conforme à la revendication 2, dans laquelle la taille des particules des matériaux à insertion de lithium vaut de 10 nm à 10 µm.

6. Pile électrochimique rechargeable, conforme à la revendication 2, dans laquelle l'élément séparateur
- est en oxynitrure de lithium et phosphore (LiPON) ou en le matériau de formule 70Li₂S·30P₂S₅,
- ou est une membrane d'ultrafiltration en céramique dont les pores ont des rayons de valeur choisie de telle sorte que cette membrane est imperméable aux composés à activité redox, mais perméable aux petits ions de lithium,
- ou encore est une membrane perforée en polymère, dont les pores ont, à nouveau, une taille spécifique, qui permet le passage des ions de lithium, mais empêche la perméation des composés à activité redox.

7. Pile électrochimique rechargeable, conforme à l'une des revendications précédentes, dans laquelle le composé à activité redox de type p présente la structure suivante : 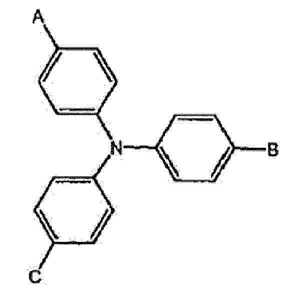 dans laquelle A, B et C représentent des entités symbolisées par F, Cl, Br, I, NO₂, COOR, R, CF₃, COR, OCH₃ ou H, étant entendu que R représente un groupe alkyle en C₁₋₂₀.

8. Pile électrochimique rechargeable, conforme à l'une des revendications 1 à 6, pour laquelle le composé à activité redox de type p est choisi parmi ceux de formules structurales 2 à 7 suivantes : 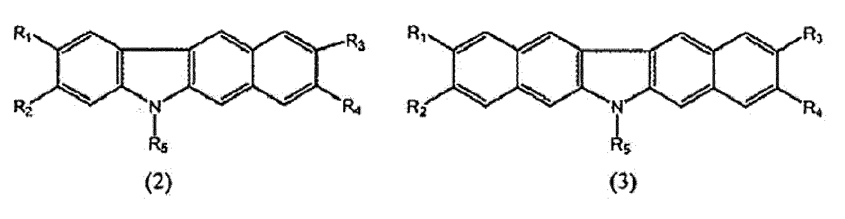 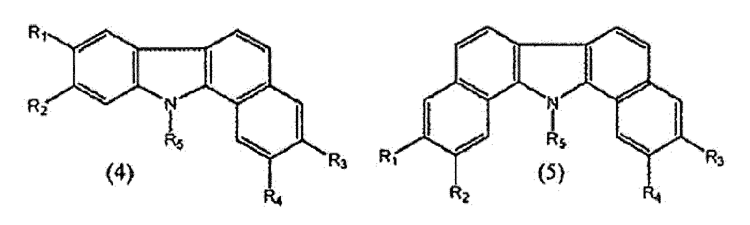 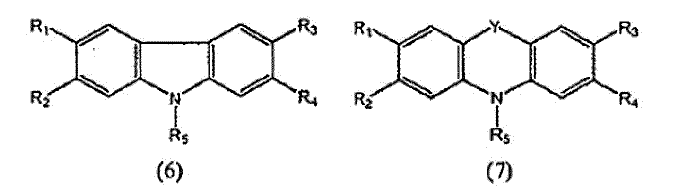 dans lesquelles Y représente un atome d'azote, d'oxygène ou de soufre, et R₁, R₂, R₃ et R₄ représentent des groupes alkyle en C₁₋₂₀ ou des entités symbolisées par F, Cl, Br, I, NO₂, COOR, CF₃, COR, OR₅ ou H, étant entendu que R représente un groupe alkyle en C₁₋₂₀ ou un atome d'hydrogène.

9. Pile électrochimique rechargeable, conforme à l'une des revendications 1 à 6, pour laquelle le composé à activité redox de type p est choisi parmi ceux de formules structurales 8 et 9 suivantes : 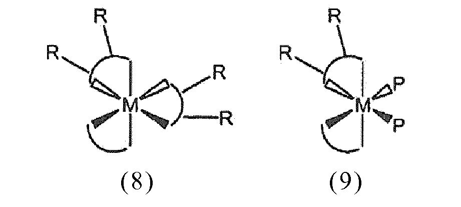 dans lesquelles 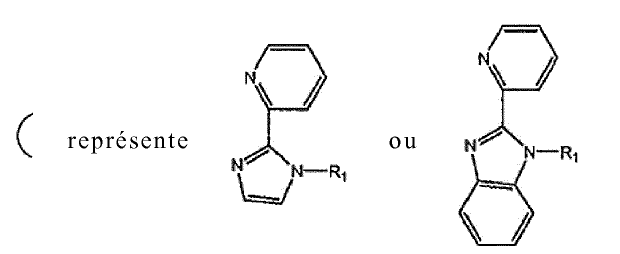 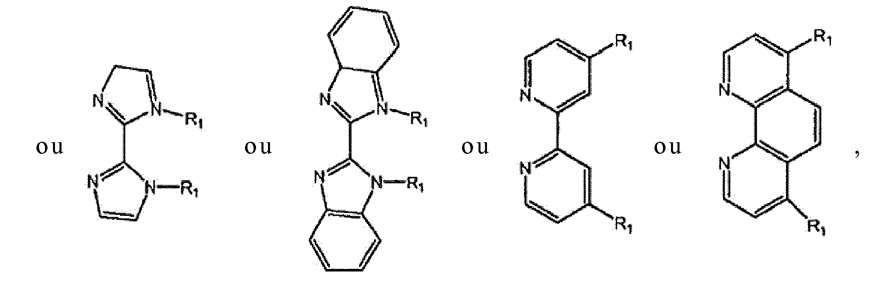 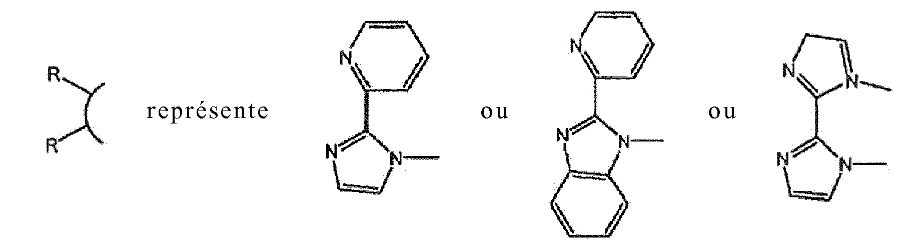 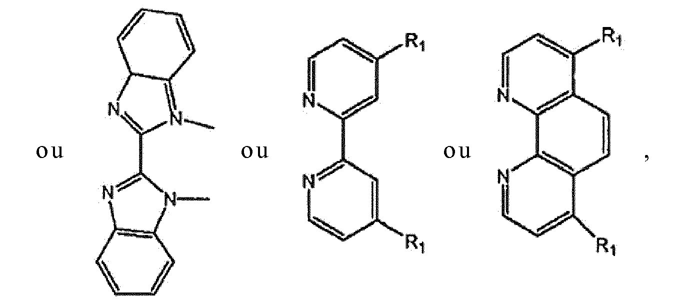
M représente un atome de fer, de ruthénium ou d'osmium,
R₁ représente une entité symbolisée par COOR', COR', CF₃, OR', NO₂, F, Cl, Br, I, NR'₂ ou R', étant entendu que R' représente un groupe alkyle en C₁₋₂₀ ou un atome d'hydrogène,
et P représente une entité symbolisée par F, Cl, Br, I, NO₂, CN, NCSe, NCS ou NCO.

10. Pile électrochimique rechargeable, conforme à l'une des revendications 1 à 6, pour laquelle le composé à activité redox de type p présente la structure suivante : 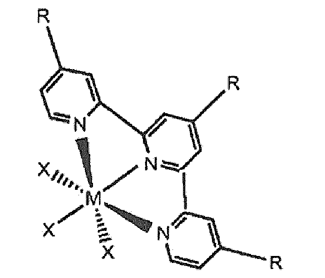 dans laquelle
M représente un atome de fer, de ruthénium ou d'osmium,
R représente une entité symbolisée par COOR', COR', CF₃, OR', NO₂, F, Cl, Br, I, NR'₂ ou R', étant entendu que R' représente un groupe alkyle en C₁₋₂₀ ou un atome d'hydrogène,
et X représente une entité symbolisée par F, Cl, Br, I, NO₂, CN, NCSe, NCS ou NCO.

11. Pile électrochimique rechargeable, conforme à l'une des revendications 1 à 6, pour laquelle le composé à activité redox de type p est choisi parmi ceux de formules structurales 11 et 12 suivantes : 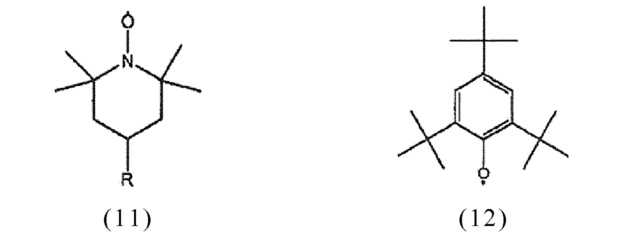 dans lesquelles R représente une entité symbolisée par COOR', COR', CF₃, OR', NO₂, F, Cl, Br, I, NR'₂ ou R', étant entendu que R' représente un groupe alkyle en C₁₋₂₀ ou un atome d'hydrogène.

12. Pile électrochimique rechargeable, conforme à l'une des revendications 1 à 6, pour laquelle le composé à activité redox de type p est choisi parmi ceux de formules structurales 13 et 14 suivantes : 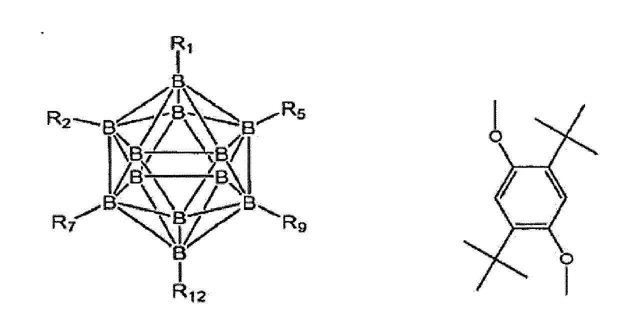
(B₁₂R¹R²R³R⁴R⁵R⁶R⁷R⁸R⁹R¹⁰R¹¹R¹²)
dans lesquelles R¹, R², R³, R⁴, R⁵, R⁶, R⁷, R⁸, R⁹, R¹⁰, R¹¹ et R¹² peuvent représenter des entités symbolisées par COOR', COR', CF₃, OR', NO₂, F, Cl, Br, I, NR'₂ ou R', étant entendu que R' représente un groupe alkyle en C₁₋₂₀ ou un atome d'hydrogène.

13. Pile électrochimique rechargeable, conforme à l'une des revendications 1 à 6, pour laquelle le composé à activité redox de type n est choisi parmi ceux de formules structurales 15 et 16 suivantes : 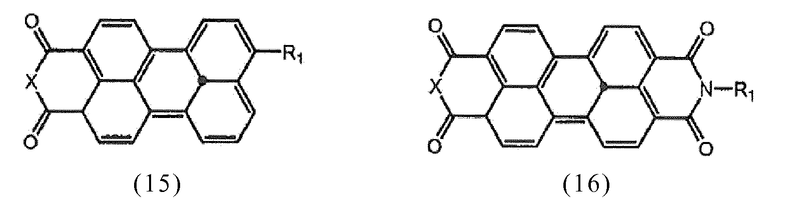 dans lesquelles X représente un atome d'oxygène ou un groupe symbolisé par NCH₂R, et R₁ représente un groupe alkyle en C₁₋₂₀ ou un atome d'hydrogène.

14. Pile électrochimique rechargeable, conforme à l'une des revendications 1 à 6, pour laquelle le composé à activité redox de type n est choisi parmi ceux de formules structurales 17 et 18 suivantes : 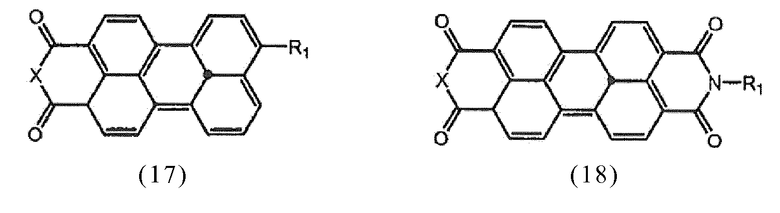 dans lesquelles X représente un groupe de formule 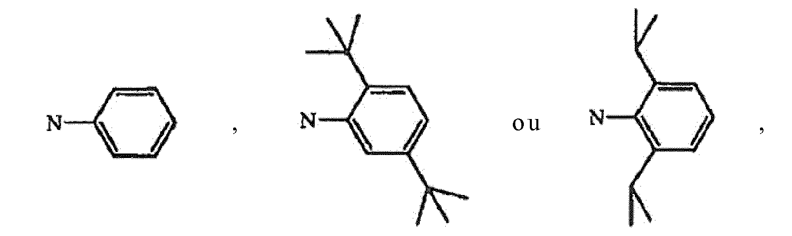 et R₁ représente un groupe symbolisé par NHCH₂R, étant entendu que R représente un groupe alkyle en C₁-₂ₒ ou un atome d'hydrogène.
